# FASCICULE DE BREVET EUROPEEN

(11) **EP 3 463 978 B1**
(45) Date de publication et mention de la délivrance du brevet: **15.04.2020**
(21) Numéro de dépôt: 17730879.8
(22) Date de dépôt: 29.05.2017
(51) Int. Cl.: B60P 3/22, B60P 3/24, E03F 7/10

(54) **VÉHICULE HYDROCUREUR COMPRENANT DES RÉSERVOIRS D'EAU EN MATIÈRE PLASTIQUE ET UNE CITERNE DE STOCKAGE MONTÉE BASCULANTE DE FAÇON DISSOCIÉE DES RÉSERVOIRS**
WASSERSTRAHLAUSSTOSSENDER LASTKRAFTWAGEN MIT KUNSTSTOFFWASSERBEHÄLTERN UND EINEM SPEICHERTANK MIT MONTAGE ZUM BEHÄLTERUNABHÄNGIGEN DREHEN
JETTING TRUCK COMPRISING PLASTIC WATER RESERVOIRS AND A STORAGE TANK MOUNTED TO PIVOT INDEPENDENTLY OF SAID RESERVOIRS

(30) Priorité: 30.05.2016 FR 1654866
(43) Date de publication de la demande: 10.04.2019
(73) Titulaire: Hydrovide, 49430 LEZIGNE (FR); Plasticon France SA, 85170 DOMPIERRE SUR YON (FR)
(72) Inventeur: MORIN, Christian, 49430 DURTAL (FI); OLIVRE, Jean-Yves, 85190 La Genétouze (FR)
(74) Mandataire: Gicquel, Frédéric
(86) Numéro de dépôt international: PCT/FR2017/051331
(87) Numéro de publication internationale: WO 2017/207906

(56) Documents cités:
- EP-A1- 2 295 656
- US-A- 2 037 022
- US-A- 3 125 348

## Description

Le domaine de l'invention est celui de la conception et de la fabrication de véhicules poids-lourd utilisés dans le domaine de l'assainissement et de la voirie. Plus précisément, l'invention concerne la conception et la fabrication d'un véhicule d'hydrocurage, aussi nommés « véhicules hydrocureurs ». Un tel véhicule est divulgué par EP 2295656 A1.

Dans le domaine de l'assainissement et de la voirie, il est classique de proposer des véhicules poids-lourds pourvus d'équipements permettant d'effectuer notamment l'entretien de canalisations de réseaux d'eau publics.

Plus précisément, ces équipements lourds intègrent :
- une réserve d'eau ;
- un système haute pression couplé à la réserve d'eau ;
- un système de tuyaux et de buses haute-pression utilisant l'eau mise sous pression pour curer les canalisations à nettoyer, ceci grâce à des jets d'eau haute-pression (250 bar par exemple) pour réaliser leur curage et/ou leur débouchage.

Ces équipements lourds intègrent également une citerne de stockage, s'étendant selon l'axe longitudinal du véhicule. Les effluents de curage sont aspirés et stockés dans la citerne de stockage. Classiquement, l'aspiration des effluents est obtenue par une mise sous dépression de la citerne, notamment à l'aide de pompe à air à haut-débit, couplée au système de tuyaux d'aspiration. De cette manière, les effluents de curage (boues résultant du nettoyage, les résidus solides délogés par les buses haute-pression, ...) peuvent être aspirés jusque dans la citerne de stockage, en s'affranchissant du recours à des pompes qui seraient rapidement endommagées par le passage des matières solides présentes dans les effluents.

Communément, ces citernes de stockage sont réalisées avec des parois en acier d'une épaisseur d'au moins 6 mm. Une telle épaisseur de ces parois en acier est calculée, avec un coefficient de sécurité important, en fonction des contraintes s'exerçant sur ces citernes de stockage.

En effet, les citernes doivent pouvoir :
- être mise en dépression de manière à pouvoir aspirer les résidus du nettoyage, et elles doivent ainsi résister à une telle dépression (éviter un flambement de la citerne) ;
- résister à l'abrasion et aux chocs résultant des résidus aspirés (morceaux de bétons, briques, sable, ...) ;
- résister à la corrosion ;
- résister aux efforts s'exerçant sur la citerne, chargée ou déchargée, quand le véhicule qu'elle équipe est en mouvement.

Ces citernes comportent également des fonds ouvrant et sont conçues basculantes sur les véhicules hydrocureurs. Grâce à cette conception, les citernes peuvent être déchargées relativement rapidement, en faisant basculer la citerne de stockage de façon à évacuer les effluents par l'arrière de la citerne, une fois le fonds ouvrant en position d'ouverture.

Tel qu'on peut le comprendre, lors de l'utilisation du véhicule hydrocureur, la citerne pourvue de son fond ouvrant se doit d'être étanche, et comprend ainsi des moyens d'étanchéité du fond ouvrant. En conséquence, pour permettre une fermeture étanche, les citernes doivent absolument conserver leur forme initiale pour permettre la bonne fermeture du fond étanche et le bon établissement de l'étanchéité.

Aussi, des parois en acier de 6 mm d'épaisseur permettent à ces citernes de supporter les contraintes qu'elles subissent, et d'avoir une durabilité importante (au moins 20 années d'exploitation possibles).

Grâce à leur résistance, de telles citernes permettent de constituer un corps support sur lequel il est possible de fixer du matériel ou des systèmes, en particulier par soudage, et ce sans porter atteinte à l'intégrité de ces citernes. En effet, on peut par exemple souder sur la citerne des systèmes d'enroulement des tuyaux servant au nettoyage, quand bien même de tels systèmes présentent un poids important.

Par ailleurs, selon une conception répandue, les citernes des véhicules hydrocureurs peuvent être conçues de manière à présenter une cloison mobile permettant à ces citernes de transporter directement la réserve d'eau. Ainsi, un volume interne de la citerne peut être consacré à la réserve d'eau, tandis qu'un autre volume interne est consacré au stockage des effluents recueillis. Aussi, lors de la réalisation d'un traitement, la cloison mobile est déplacée pour libérer de la place pour le stockage des effluents de curage, ceci au fur et à mesure que le volume d'eau diminue.

Les véhicules utilisant ce type d'équipements et ces citernes en acier présentent cependant un inconvénient important relatif à la charge utile du véhicule. En effet, les citernes en acier, avec une paroi classique de 6 mm d'épaisseur, et les équipements qu'elle porte, sont particulièrement lourds, ce qui limite de facto la capacité de transport en effluents de curage vis-à-vis du poids total autorisé en charge du véhicule. En conséquence, de tels véhicules hydrocureurs doivent effectuer des allers retours fréquents et chronophages jusqu'à des lieux de déchargement des effluents de curage et de rechargement en eau.

Au sujet de la réserve d'eau emportée par les véhicules hydrocureurs, l'art antérieur propose également des solutions mettant en oeuvre des réservoirs d'eau extérieurs à la citerne, qui remplacent la mise en oeuvre de la cloison mobile ou qui viennent en complément du système à cloison mobile.

Par exemple, selon une première proposition de l'art antérieur, on connaît des réservoirs extérieurs constitués de parois métalliques. Ces réservoirs métalliques s'étendent le long de la citerne de stockage, remontent à mi-hauteur de la citerne (pour éviter de trop remonter le centre de gravité du véhicule et/ou de le déstabiliser) et forment ainsi un demi-berceau pour la citerne, utilisant ainsi les propriétés des parois métalliques des réservoirs pour former ce berceau d'accueil.

De tels réservoirs extérieurs métalliques présentent néanmoins pour inconvénient d'avoir une capacité de stockage d'eau limitée. Pour augmenter cette capacité de stockage, il est bien entendu concevable d'augmenter la largeur de la base des réservoirs. En pratique, une telle solution n'est pas mise en œuvre car elle peut entraîner une modification sensible de la largeur hors-tout du véhicule, au point éventuellement de faire passer le véhicule dans la catégorie des convois exceptionnels et compliquer alors la circulation du véhicule. En outre, de telles conceptions des réservoirs extérieurs avec des parois métalliques induisent un gain de masse important et diminuent la charge utile totale des véhicules hydrocureurs.

Selon une deuxième proposition de l'art antérieur, on connaît des réservoirs extérieurs, métalliques ou plastiques, qui sont couplés de manière fixe sur les flancs de la citerne de stockage. De tels réservoirs permettent d'avoir une capacité de stockage plus importante en comparaison avec la solution de l'art antérieur mentionnée précédemment, et ce notamment du fait d'une hauteur des réservoirs plus importante.

Cette deuxième proposition présente elle aussi des inconvénients qui résident dans l'augmentation du poids de la citerne de stockage, induisant le besoin d'avoir un système de relevage plus puissant pour provoquer la bascule de la citerne. En outre, cette solution tend à engendrer une élévation du centre de gravité du véhicule hydrocureur, ce qui n'est pas souhaitable. De manière complémentaire, les réservoirs couplés sur les flancs de la cuve entraînent des contraintes structurelles sur la citerne de stockage.

Au sujet des fonds ouvrants des citernes de stockage, on peut noter que l'art antérieur propose des systèmes d'articulation entraînés en mouvement par des vérins, et également des moyens de fermeture et de mise en étanchéité de la citerne de stockage, tel qu'évoqué précédemment. Ces moyens de fermeture et de mise en étanchéité prennent classiquement la forme d'ensembles d'éléments complémentaires soudés sur le fond ouvrant et sur le corps de la citerne, avec notamment :
- des brides ;
- des griffes articulées couplées à des vérins.

Plus précisément, les griffes sont destinées à venir agripper les brides pour tracter le fond ouvrant contre l'ouverture de la citerne. Une fois le fond ouvrant correctement positionné contre l'ouverture, la conception des griffes permet d'appliquer une pression suffisant pour comprimer un joint d'étanchéité et réaliser l'étanchéité.

Classiquement, on retrouve au moins quatre ensembles bride/griffe régulièrement répartis en périphérie du fond ouvrant de la citerne de stockage. De tels mécanismes augmentent le poids total à vide du véhicule hydrocureur et diminuent en conséquence sa charge utile. Bien entendu, ces quatre ensembles impliquent aussi des coûts matière et des coûts de montage.

L'invention a notamment pour objectif de pallier ces inconvénients de l'art antérieur.

Plus précisément, l'invention a pour objectif de proposer un véhicule hydrocureur qui a une charge utile plus importante que les véhicules hydrocureurs de l'art antérieur.

L'invention a également pour objectif de proposer un tel véhicule hydrocureur qui permette de rentabiliser plus aisément une intervention de nettoyage en diminuant les coûts d'intervention et/ou de transport.

L'invention a encore pour objectif de proposer un tel véhicule hydrocureur qui présente une durabilité au moins comparable à celle des véhicules selon l'art antérieur.

Ces objectifs, ainsi que d'autres qui apparaîtront par la suite, sont atteints grâce à l'invention qui a pour objet un véhicule hydrocureur du type comprenant :
- un châssis porteur ;
- une citerne de stockage présentant, selon un axe longitudinal, un corps principal pourvu à l'une de ses extrémités longitudinales d'un fond ouvrant, la citerne de stockage étant montée basculante par rapport au châssis ;
- des réservoirs d'eau, disposés latéralement de part et d'autre de la citerne, destinés à alimenter des moyens de curage haute-pression, la citerne de stockage étant montée basculante de façon dissociée des réservoirs ;
- des moyens d'aspiration d'effluents de curage, reliés à la citerne de stockage,
caractérisé en ce que les réservoirs comprennent des parois en matière plastique ou composite et s'étendent jusqu'en partie supérieure de la citerne de stockage, et en ce qu'il comprend des moyens de renfort et de soutènement reliant les réservoirs au châssis.

De cette façon, un véhicule hydrocureur selon l'invention augmente considérablement la capacité de stockage et de transport d'effluents de curage comparé aux véhicules hydrocureurs de l'art antérieur, pour une même charge utile admise.

En effet, le poids des réservoirs d'eau, de par la réalisation de leurs parois en matière plastique, peut être considérablement réduit. Cette réduction de poids, en considération de la charge utile admise, peut donc se traduire en une augmentation de la capacité de stockage des effluents de curage.

On peut ainsi clairement améliorer notablement la rentabilité des interventions, en particulier en optimisant les allers et venues du véhicule.

Selon le principe de l'invention, on met donc en œuvre des réservoirs d'eau plus légers, mais également plus déformables. De plus, selon le principe de l'invention, les réservoirs ne bénéficient pas, pour leur tenue mécanique, du support de la paroi de la citerne, cette dernière étant dissociée des réservoirs. L'invention propose donc une solution au problème engendré par la mise en œuvre de réservoirs légers non supportés par la citerne, par la mise en œuvre des moyens de renfort et de soutènement qui vont maintenir en place et en forme les réservoirs, les efforts s'exerçant sur les moyens de renfort et de soutènement (en transitant jusqu'au châssis au niveau duquel ils vont se dissiper) et non sur les réservoirs.

Comme cela va apparaître par la suite, ce résultat peut être encore amélioré en réalisant le corps principal de la citerne de stockage en un matériau beaucoup plus léger, par exemple en un matériau composite.

Selon une solution avantageuse, les réservoirs comprennent chacun une pluralité de compartiments indépendants, plaqués les uns contre les autres par les moyens de renfort et de soutènement, les compartiments étant reliés à une nourrice commune.

Les réservoirs ainsi conçus en compartiments rapportés les unes contre les autres sont plus simples à fabriquer, à manutentionner et à monter, en comparaison d'un réservoir unique de même capacité que celle des compartiments ensemble.

Le fonctionnement du réseau haute-pression du véhicule s'avère quant à lui relativement aisé, en présence des compartiments multiples, par le recours à une nourrice commune.

Avantageusement, les moyens de renfort et de soutènement comprennent, pour chaque réservoir, au moins une poutre supérieure disposée en recouvrement du réservoir et au moins un longeron intermédiaire.

Dans ce cas, les moyens de renfort et de soutènement comprennent préférentiellement, pour chaque réservoir, un montant avant et un montant arrière solidarisés au châssis et reliant rigidement la poutre supérieure et le longeron intermédiaire pour former un cadre rigide ceinturant le réservoir.

De cette façon, la rigidification et la stabilité des réservoirs sont parfaitement assurées.

De plus, la poutre supérieure présente des passages pour relier le réservoir à une canalisation de remplissage et/ou pour au moins un évent.

Comme cela va être décrit plus en détails par la suite, l'un des compartiments d'au moins un des réservoirs est relié à une canalisation de remplissage, et tous les autre compartiments présentent chacun un évent (mis à contribution lors du remplissage et de la vidange de tous les compartiments par effet des vases communicants) passant au travers de la poutre supérieure.

Selon un mode de réalisation avantageux, les réservoirs présentent en regard l'un de l'autre des formes délimitant un berceau apte à accueillir la citerne de stockage.

Comme cela va être expliqué par la suite, cette forme en berceau des réservoirs n'a aucun effet structurel pour supporter la citerne. En revanche, la citerne ayant une forme cylindrique, la forme en berceau des réservoirs permet d'exploiter, pour la réserve d'eau, l'espace présent sous la courbure inférieure de la citerne.

Avantageusement, au moins un des réservoirs présente une cavité inférieure de rangement d'accessoires accessible par une face externe du véhicule.

Dans ce cas, le réservoir présente, au-dessus de la cavité inférieure, une partie en porte-à-faux, et le longeron intermédiaire soutient préférentiellement la partie en porte-à-faux.

Selon une autre caractéristique, les réservoirs sont portés par un plancher composite porté par le châssis.

On obtient de cette façon une bonne répartition de la charge induite par les réservoirs, ceci avec un plancher dont la masse est limité par rapport à une conception classique en pièces métalliques. Un tel plancher contribue donc à l'exploitation optimisée de la charge utile du véhicule.

Préférentiellement, les réservoirs présentent au moins une entretoise interne de rigidification.

Une telle entretoise, positionnée de façon appropriée sur la hauteur des réservoirs, participe à la stabilité et à la rigidité des réservoirs. Dans le cas où ceux-ci sont constitués par une série de compartiments comme indiqué précédemment, chaque compartiment est pourvu d'une telle entretoise.

Selon un mode de réalisation préférentiel, les réservoirs sont réalisés en matière plastique, et préférentiellement en polyéthylène rotomoulé.

Selon une autre approche avantageuse de l'invention, complémentaire ou indépendante de la conception des réservoirs qui vient d'être décrite, les moyens d'aspiration comprennent des moyens de mise en dépression de la citerne de stockage, et le corps principal de la citerne de stockage est réalisé en un matériau composite, le corps principal étant pourvu de renforts périphériques aptes à lutter contre un flambement de la citerne de stockage sous l'effet de la mise en dépression.

On obtient ainsi un résultat de même nature que celui obtenu avec la conception des réservoirs d'eau ayant des parois en matière plastique.

En effet, le poids de la citerne de stockage, de par la réalisation de son corps principal en un matériau composite, peut être considérablement réduit. Cette réduction de poids, en considération de la charge utile admise, peut donc se traduire en une augmentation de la capacité de stockage des effluents de curage.

On note que l'effet induit par le recours au composite pour le corps principal de la citerne de stockage, s'agissant de sa tenue mécanique, est contrebalancé par la mise en œuvre des renforts périphériques.

Préférentiellement, les renforts périphériques comprennent une série de cerclages répartis en longueur sur la citerne de stockage.

De tels cerclages contribuent à la capacité de la citerne de stockage à éviter un flambement. Plus spécifiquement, ces cerclages peuvent être reliés à un élément couplé sur le châssis (notamment l'articulation de la citerne sur le châssis), pour que ces cerclages soient adaptés à supporter des équipements lourds et à assurer une descente de charge jusqu'au châssis, au niveau duquel les charges se dissipent, et ainsi éviter un flambement (écrasement) de la citerne. Selon deux variantes envisageables, les cerclages sont métalliques ou réalisés en un matériau composite.

Préférentiellement, au moins certains des cerclages sont reliés entre eux par une paire de barres longitudinales définissant ensemble un plan au-dessus de la citerne de stockage.

On obtient ainsi un cadre support apte à supporter des charges relativement importantes, tel que par exemple l'enrouleur et le bras télescopique du tuyau d'aspiration.

Ces barres longitudinales sont métalliques, ou préférentiellement essentiellement en matériau composite.

Selon une caractéristique avantageuse, la citerne de stockage présente au moins un piquage d'aspiration en partie supérieure de la citerne, et la citerne de stockage intègre un bouclier anti-impact interne positionné à l'aplomb du piquage d'aspiration dans une position horizontale de la citerne de stockage.

Les effluents de curage peuvent en effet inclure des matières solides relativement lourdes, dures et présentant une surface extérieure plus ou moins saillante. En se déversant dans la citerne, et en chutant sur la hauteur interne de la citerne, ces matières solides peuvent donc s'avérer agressives pour la paroi composite du corps principal de la citerne. La présence du bouclier anti-impact permet donc de préserver la paroi du corps principal dans la zone d'impact des matières solides lors du déversement des effluents au travers du piquage d'aspiration.

Dans ce cas, le bouclier anti-impact consiste préférentiellement en un revêtement amortisseur rapporté dans un évidement interne de la citerne de stockage, l'évidement présentant une profondeur et le revêtement présentant une épaisseur égale à la profondeur de l'évidement.

On évite de cette façon de créer une zone en saillie au fond du corps principal, qui pourrait créer une zone de retenue lors de la vidange de la citerne de stockage, par basculement de celle-ci.

Selon un mode de réalisation particulier, le revêtement amortisseur est réalisé en un élastomère de polyuréthane.

Selon encore une autre approche avantageuse de l'invention, complémentaire ou indépendante de la conception des réservoirs et de la citerne de stockage qui vient d'être décrite, le fond ouvrant est couplé à la citerne de stockage par une articulation autour d'un axe de rotation, l'articulation étant couplée à un vérin d'actionnement et comprenant au moins une platine solidaire en rotation autour de l'axe de rotation avec le fond ouvrant, ladite ou lesdites platines présentant un degré de mobilité longitudinal permettant au vérin d'actionnement de serrer longitudinalement, en position de fermeture, le fond ouvrant contre le corps principal de la citerne de stockage.

Ainsi, le vérin d'actionnement du fond ouvrant exerce une double fonction. Selon une première fonction traditionnelle, il entraîne l'ouverture et la fermeture de la citerne de stockage, par la mise en mouvement du fond ouvrant.

Selon une deuxième fonction, ajoutée à la première grâce à la conception de l'articulation, le vérin d'actionnement contribue à l'étanchéité du fond ouvrant sur le corps principal de la citerne, en exerçant un effort de serrage longitudinal du fond ouvrant contre le corps principal de la citerne.

Ainsi, il est possible de diminuer le nombre des vérins dédiés à cette fonction selon l'art antérieur, et donc de diminuer les coûts des composants et les coûts de montage.

Dans ce cas, selon une solution préférentielle, le fond ouvrant présente au moins une platine présentant un bras monté rotatif autour de l'axe de rotation de l'articulation, le bras s'étendant selon l'axe longitudinal de la citerne de stockage dans une position de fermeture du fond ouvrant, et présentant un premier élément et un deuxième élément montés coulissant l'un par rapport à l'autre, l'un étant fixe en translation selon l'axe longitudinal de la citerne de stockage par rapport à l'axe de rotation de l'articulation et l'autre, porté par la platine, étant mobile en translation selon l'axe longitudinal de la citerne de stockage par rapport à l'axe de rotation.

Selon une autre caractéristique avantageuse, le fond ouvrant est essentiellement réalisé en un matériau métallique, et comprend des vérins complémentaires destinés à contribuer à serrer le fond ouvrant en position de fermeture contre la citerne de stockage, des brides étant portés par la citerne et les vérins complémentaires étant solidarisés sur le matériau métallique du fond ouvrant de telle sorte que les vérins complémentaires coopèrent avec les brides pour assurer l'étanchéité du fond ouvrant en position de fermeture contre la citerne de stockage.

On note qu'une telle caractéristique s'avère particulièrement avantageuse dans le cas de la mise en œuvre d'une citerne de stockage dont le corps principal est réalisé en un matériau composite, qui limite les possibilités de fixation d'organes (tels que des corps de vérins) par soudage.

Selon une solution préférée, les vérins complémentaires coopèrent avec les brides par l'intermédiaire d'un crochet pivotant actionné par une genouillère.

D'autres caractéristiques et avantages de l'invention apparaîtront plus clairement à la lecture de la description suivante d'un mode de réalisation préférentiel de l'invention (déclinées selon plusieurs approches susceptibles d'être considérées indépendamment les unes des autres ou en combinaison), donné à titre d'exemple illustratif et non limitatif, et des dessins annexés parmi lesquels :
- la figure 1 est une vue en perspective du véhicule hydrocureur selon l'invention ;
- la figure 2 est une vue en perspective des réservoirs considérés de manière isolés par rapport au reste du véhicule hydrocureur ;
- la figure 3 est une vue selon une coupe verticale transversale de deux réservoirs placés en vis-à-vis, et plus précisément de deux compartiments ;
- la figure 4 est une vue en perspective de la citerne de stockage ;
- la figure 5 est une vue selon une coupe verticale longitudinale de la citerne de stockage ;
- la figure 6a est une vue selon une coupe verticale transversale de la citerne de stockage ;
- la figure 6b est une vue selon une coupe transversale de la paroi de la citerne de stockage au niveau d'un cerclage ;
- la figure 7 est une vue arrière de la citerne de stockage, donnant sur le fond ouvrant de la citerne ;
- la figure 8 est une vue en perspective de l'arrière de la citerne de stockage ;
- les figures 9, 10a, 10b, 11a et 11b sont des figures illustrant la cinématique de fermeture du fond ouvrant de la citerne de stockage.

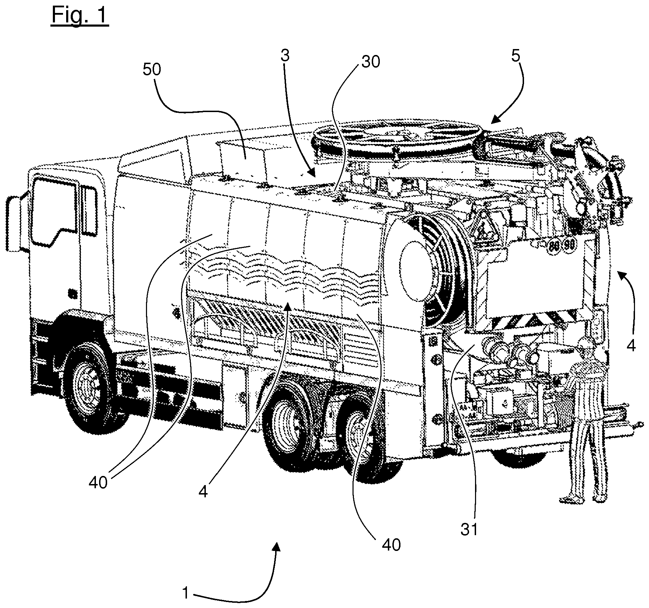

Tel qu'on peut l'observer sur la figure 1, un véhicule hydrocureur 1 selon l'invention est un véhicule de type poids-lourd.

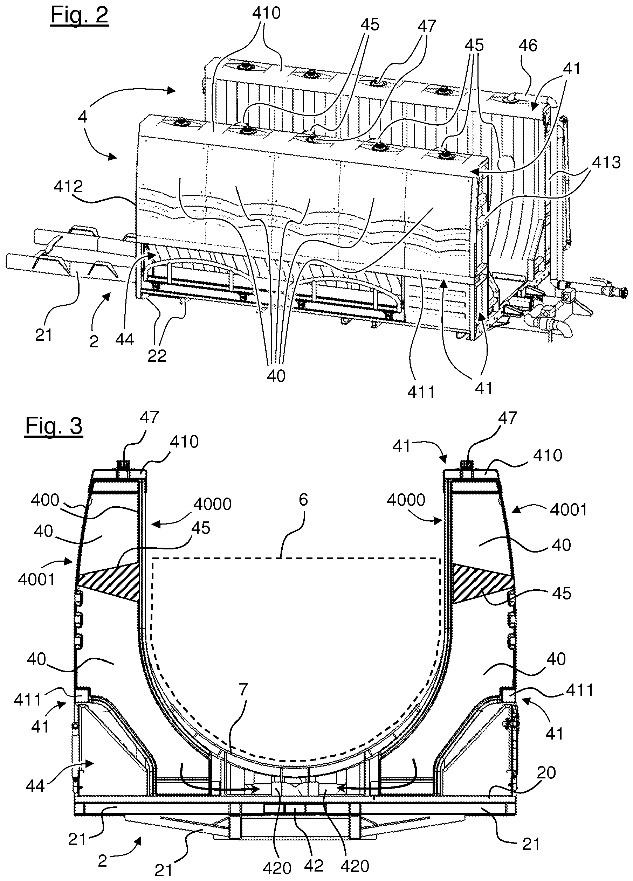

Ce véhicule hydrocureur comprend :
- un châssis 2 porteur (apparaissant sur la figure 2) ;
- une citerne de stockage 3 couplée au châssis porteur, positionnée sur la partie arrière du véhicule, et s'étendant selon l'axe longitudinal du véhicule en étant centrée sur la largeur du véhicule ;
- des réservoirs 4 d'eau qui sont disposés latéralement de part et d'autre de la citerne de stockage, destinés à alimenter des moyens de curage haute-pression ;
- des moyens d'aspiration 5 d'effluents de curage, reliés à la citerne de stockage.

La citerne de stockage présente, selon un axe longitudinal, un corps principal 30 qui est pourvu à l'une de ses extrémités longitudinales (son extrémité arrière en l'occurrence) d'un fond ouvrant 31, le fond ouvrant étant essentiellement réalisé en un matériau métallique.

Cette citerne de stockage est montée basculante par rapport au châssis, entre une position horizontale (pour le transport et les interventions d'hydrocurage) et une position inclinée (partie avant en hauteur par rapport à la partie arrière présentant le fond ouvrant) pour favoriser l'évacuation des effluents stockés par l'arrière de la citerne lorsque le fond ouvrant est en position ouverte. Par contre, les réservoirs sont montés sur le châssis de façon dissociée du basculement possible de la citerne. Selon le présent mode de réalisation, les réservoirs sont montés fixes sur le châssis.

La citerne de stockage n'assure donc aucun rôle support des réservoirs.

Selon le principe de l'invention, les réservoirs comprennent des parois en matière plastique ou composite, qui s'étendent jusqu'en partie supérieure de la citerne de stockage.

En référence aux figures 2 et 3, pour résister aux contraintes auxquelles les réservoirs 4 sont soumis, le véhicule hydrocureur comprend également des moyens de renfort et de soutènement 41 qui relient les réservoirs aux châssis 2 porteur (lui-même fixé sur le châssis de base du véhicule, portant entre autres les essieux), les réservoirs pouvant ainsi être maintenus en place et en forme tandis que les moyens de renfort et de soutènement subissent les efforts transmis, sans fléchir.

Plus précisément, les réservoirs 4 sont portés par un plancher composite 20, qui est lui-même porté par le châssis 2 porteur.

Le châssis 2 porteur est donc un châssis spécifique au véhicule hydrocureur selon l'invention et est couplé au châssis de base du véhicule poids lourd. Ce châssis porteur comprend une structure 21 en acier et des profilés en aluminium 22 en U, positionnés sur la structure en acier. Le plancher composite repose ainsi sur les profilés aluminium et présente une hauteur d'environ 120 mm.

Tel qu'illustré par les figures 2 et 3, les moyens de renfort et de soutènement 41 comprennent, pour chaque réservoir 4 :
- au moins une poutre supérieure 410 ;
- au moins un longeron intermédiaire 411, s'étendant sur toute la longueur du réservoir ;
- un montant avant 412 ;
- un montant arrière 413.

La poutre supérieure 410 est disposée en recouvrement du réservoir. Elle présente des passages permettant de relier le réservoir à une canalisation de remplissage 46 et/ou un évent 47.

Le montant avant et le montant arrière viennent en complément de la poutre supérieure et du longeron intermédiaire. En effet ces montants sont solidarisés au châssis 2 porteur et relient rigidement la poutre supérieure et le longeron intermédiaire de manière à former un cadre rigide ceinturant le réservoir.

Selon cette conception, le cadre rigide ainsi formé permet de rigidifier complètement les réservoirs pour compenser leur structure déformable résultant de leur forme (réservoir s'étendant jusqu'en partie supérieure de la citerne de stockage) et du matériau utilisé pour réaliser les parois des réservoirs.

On note que les montants avant et arrière sont constitués par un assemblage de profilés métalliques verticaux et horizontaux, reliés par des liaisons mécano-soudées, formant un treillis métallique rigide.

Selon le présent mode de réalisation, illustré par les figures 2 et 3, les réservoirs 4 sont conçus modulaires. En effet, les réservoirs comprennent une pluralité de compartiments 40 indépendants. Ces compartiments 40 sont plaqués les uns contre les autres par les moyens de renfort et de soutènement 41 évoqués précédemment.

Tel qu'illustré par la figure 3, chaque compartiment 40 est relié à une nourrice 42 commune. Plus précisément, chaque compartiment est relié à la nourrice par l'intermédiaire de sorties basses d'alimentation 420. Cette nourrice alimente ainsi les moyens de curage haute-pression à partir de l'eau contenu dans tous les compartiments.

Toujours selon la figure 3, on observe que les réservoirs 4 présentent en regard l'un de l'autre des formes qui délimitent un berceau 6 apte à accueillir la citerne de stockage 3.

On peut noter que les réservoirs ne sont pas destinés à supporter le poids de la citerne de stockage. En effet, les réservoirs peuvent même présenter une forme qui s'étend en dessous de la citerne de stockage pour gagner en capacité, sans que la citerne ne repose dessus.

Tel qu'on peut l'observer sur la figure 3, une structure support 7 s'étend à partir du châssis 2 porteur et décrit une forme apte à supporter la citerne de stockage. Cette structure support se situe vers la partie avant du véhicule pour supporter l'extrémité avant de la citerne.

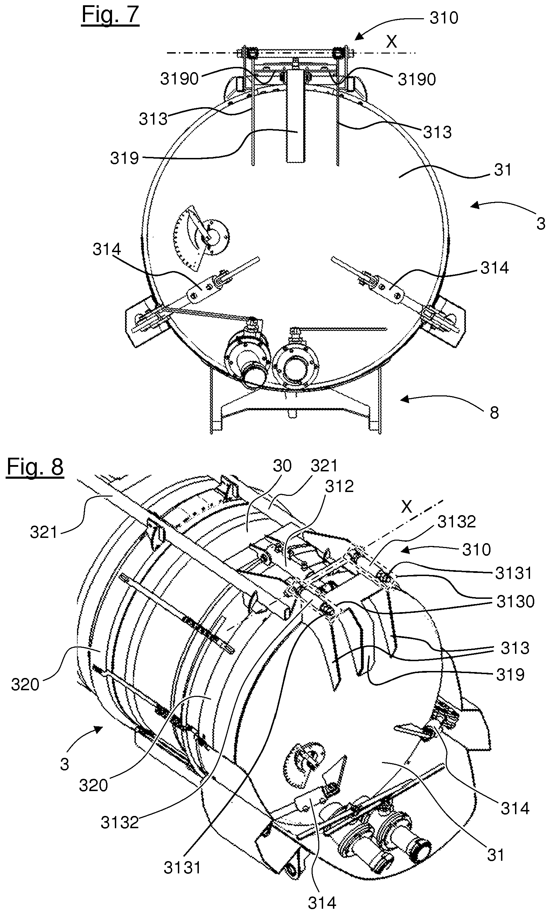

L'extrémité arrière de la citerne est quant à elle soutenue par les moyens de basculement 8 illustrés sur les figures 7 et 8.

En référence aux figures 2 et 3, on observe que les réservoirs, présentent des entretoises internes de rigidification 45. Plus précisément, chaque compartiment 40 présente au 2/3 de sa hauteur et de manière centrée par rapport à sa face intérieure 4000, orientée vers la citerne, et sa face extérieure 4001, une invagination de la paroi en regard de la citerne vers l'intérieur du réservoir, qui se prolonge jusqu'à la paroi extérieure et à laquelle l'entretoise est couplée rigidement.

Par ailleurs, tel que cela apparaît sur les figures 1 à 3, les réservoirs 4 présentent une cavité inférieure 44 de rangement d'accessoires, accessible par une face externe du véhicule.

Ces réservoirs 4 présentent, au-dessus de la cavité inférieure 44, une partie en porte-à-faux. Le longeron intermédiaire 411 (couplé à ses extrémités aux montants avant et arrière) soutient cette partie en porte-à-faux de manière à compenser la faiblesse structurelle induite par cette forme particulière. Le longeron intermédiaire forme donc un support longitudinal sur lesquels la ou les parties en porte-à-faux viennent s'appuyer.

Ces réservoirs et notamment leurs parois 400 sont réalisés en matière plastique et sont préférentiellement réalisés en polyéthylène rotomoulé.

Selon une autre caractéristique essentielle de l'invention, à considérer en combinaison avec les caractéristiques décrites précédemment ou indépendamment de celles-ci, les moyens d'aspiration 5 du véhicule hydrocureur 1 comprennent des moyens de mise en dépression 50 de la citerne de stockage 3. Ces moyens de mise en dépression sont notamment du type « pompe à air haut-débit ».

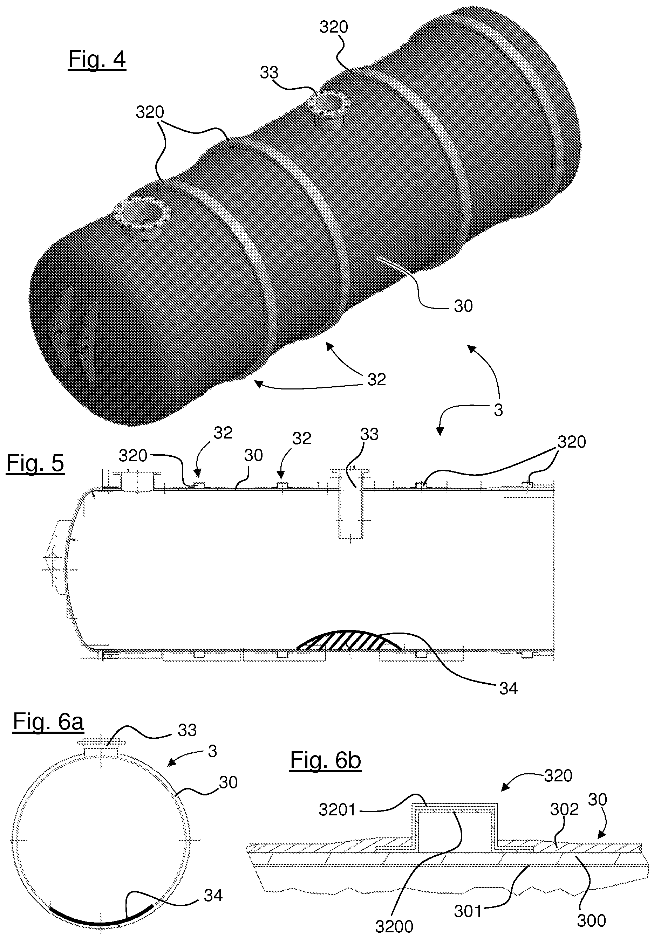

La citerne de stockage 3, illustrée par la figure 1 et par les figures 4, 5, 6a et 6b, a pour particularité d'avoir son corps principal 30 réalisé en un matériau composite. Pour renforcer la citerne de stockage, et ce notamment contre un flambement de la citerne de stockage sous l'effet de la mise en dépression, le corps principal est pourvu de renforts périphériques 32.

En référence à la figure 4, les renforts périphériques 32 comprennent une série de cerclage 320 réparties en longueur sur la citerne de stockage.

Ces cerclages sont réalisés en métal ou, préférentiellement, sont réalisés en un matériau composite.

Plus précisément et tel qu'illustré par la figure 6b, les cerclages 320 comportent :
- un anneau raidisseur 3200 en forme d'oméga ;
- un cavalier 3201 surplombant l'anneau raidisseur.

L'anneau raidisseur est métallique, ou préférentiellement en composite massif recouvert d'une couche de raidissage en carbone.

Pour optimiser le renforcement de la citerne de stockage, ces cerclages sont partiellement intégrés dans l'épaisseur de la paroi du corps principal 30.

En effet, le corps principal 30 de la citerne de stockage est composé de :
- une couche de protection interne 301, présentant notamment des propriétés d'anticorrosion et d'anti-abrasion ;
- une couche principale 300 en composite massif, pouvant avoir, à titre indicatif, une épaisseur d'environ 17 mm ;
- une couche extérieure 302 en composite, pouvant avoir, à titre indicatif, une épaisseur d'environ 8 mm.

L'anneau raidisseur 3200 et son cavalier 3201 présentent alors des pieds qui sont en contact avec la couche principale 300, et qui sont recouverts par la couche extérieure 302.

En référence à la figure 8, certains cerclages 320 sont reliés entre eux par l'intermédiaire d'une paire de barres longitudinales 321. Cette paire de barres longitudinales 321 définit un plan au-dessus de la citerne de stockage 3. De cette manière la paire de barres longitudinales peut former un cadre support pour d'autres équipements du camion hydrocureur, tout en limitant les efforts s'exerçant sur la citerne de stockage du fait de la descente de charge permise par les cerclages en direction du châssis.

Tel que cela apparaît sur les figures 4, 5 et 6a, la citerne de stockage 3 présente un piquage d'aspiration 33 qui est situé en partie supérieure de la citerne.

De plus, la citerne de stockage 3 intègre un bouclier anti-impact 34 interne positionné à l'aplomb du piquage d'aspiration dans une position horizontale de la citerne de stockage. Ce bouclier anti-impact permet d'éviter que des débris solides des effluents de curage, arrivant à haute vitesse sous l'effet de la dépression, ne viennent endommager le matériau composite du corps principal 30 de la citerne de stockage.

Ce bouclier anti-impact 34 consiste en un revêtement amortisseur rapporté dans un évidement interne de la citerne de stockage 3. Cet évidement présente une profondeur et le revêtement présente une épaisseur égale à la profondeur de l'évidement.

Préférentiellement, ce revêtement amortisseur est réalisé en un élastomère de polyuréthane.

A titre indicatif, le revêtement prend, selon une projection à plat, la forme d'un disque d'un diamètre de 1 m, et il possède une épaisseur de 6 mm.

Aussi, par comparaison, quand une paroi en acier d'une épaisseur de 6 mm présente une masse surfacique d'environ 45 Kg.m⁻², la paroi de la cuve principale en matériau composite, d'une épaisseur d'environ 18 mm, présente une masse surfacique d'environ 30 Kg.m⁻².

Selon encore une autre caractéristique essentielle de l'invention, à considérer en combinaison avec les caractéristiques décrites précédemment ou indépendamment de celles-ci, le fond ouvrant 31 est couplé sur la citerne de stockage 3 grâce à une articulation 310, autour d'un axe de rotation X. L'articulation est couplée à un vérin d'actionnement 312 et comprend deux platines 313 solidaires en rotation autour de l'axe de rotation X avec le fond ouvrant.

Ces platines ont pour particularité de présenter un degré de mobilité longitudinal permettant au vérin d'actionnement de serrer longitudinalement le fond ouvrant contre le corps principal de la citerne de stockage, en position de fermeture.

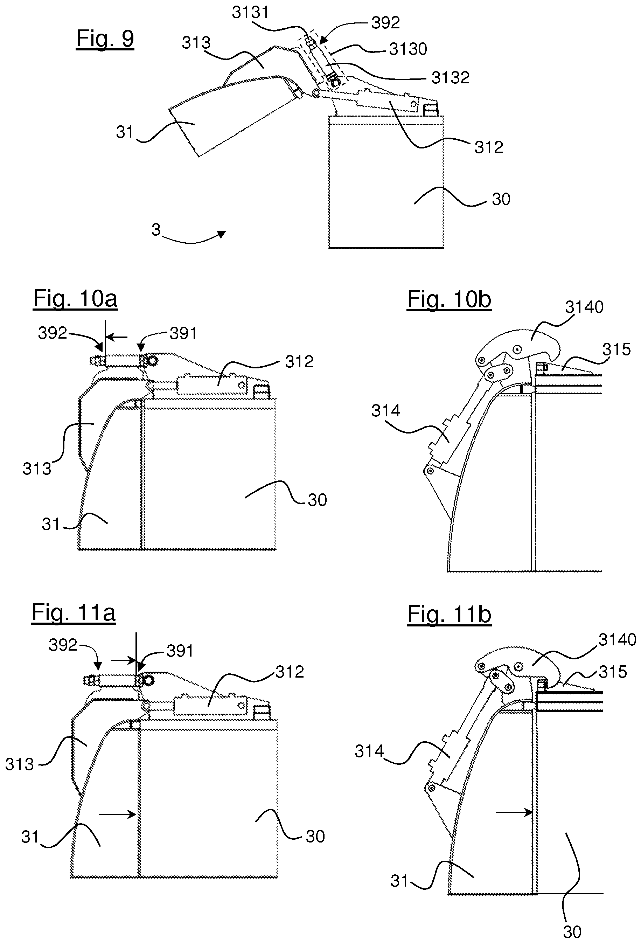

Plus précisément, les platines présentent chacune un bras 3130 monté rotatif autour de l'axe de rotation X de l'articulation. Dans une position de fermeture du fond ouvrant (figure 10a et 10b), ce bras s'étend selon l'axe longitudinal de la citerne de stockage.

Chaque bras présente un premier élément 3131 et un deuxième élément 3132 montés coulissant l'un par rapport à l'autre, l'un étant fixe en translation selon l'axe longitudinal de la citerne de stockage par rapport à l'axe de rotation X de l'articulation. L'autre élément, porté fixement par la platine, est mobile en translation selon l'axe longitudinal de la citerne de stockage par rapport à l'axe de rotation X.

En l'occurrence, le premier élément 3131 est constitué d'une tige filetée montée rotative sur l'axe de rotation X. Cette tige filetée présente une butée avant 391 et une butée arrière 392.

Le deuxième élément 3132 quant à lui est constitué par un tube monté coulissant sur la tige filetée correspondante, entre la butée avant et la butée arrière. Préférentiellement, la tige filetée présente une surface lisse entre la butée avant et la butée arrière pour faciliter le coulissement du tube.

Tel que cela sera expliqué plus en détails par la suite, l'articulation et le vérin d'actionnement ont ainsi la capacité de réaliser l'ouverture et la fermeture de la citerne de stockage par basculement du fond ouvrant, et également la capacité de participer à l'étanchéité du fond ouvrant.

En référence aux figures 7 et 8, les platines 313 sont couplées de manière fixe au fond ouvrant 31 et sont rigidifiées par un élément central en T 319 qui présente deux bras latéraux 3190 couplés aux platines, l'élément central en T 319 étant couplé de manière fixe sur le fond ouvrant. La tige du vérin d'actionnement est couplée à cet élément central en T 319.

Tel qu'illustré par les figures 7, 8, 10b et 11b, le fond ouvrant 31 comprend des vérins complémentaires 314 destinés à contribuer à serrer le fond ouvrant en position de fermeture contre la citerne de stockage 3. Des brides 315 sont portées par la citerne et les vérins complémentaires sont solidarisés sur le matériau métallique du fond ouvrant de telle sorte que les vérins complémentaires coopèrent avec les brides pour assurer l'étanchéité du fond ouvrant en position de fermeture contre la citerne de stockage.

Selon le présent mode de réalisation, et tel qu'illustré par les figures 10b et 11b, les vérins complémentaires 314 coopèrent avec les brides 315 par l'intermédiaire d'un crochet 3140 pivotant actionné par une genouillère.

Cette genouillère permet de réaliser un serrage mécanique par l'intermédiaire de deux biellettes articulées qui se bloquent lorsque l'axe d'articulation entre les deux biellettes a dépassé le point d'alignement entre les trois axes d'articulation et arrivent en butée.

En référence aux figures 7 et 9, le véhicule hydrocureur selon l'invention ne comporte que deux vérins complémentaires 314. En effet, grâce à l'articulation 310 et à son degré de mobilité longitudinal et à la capacité du vérin d'actionnement 310 à réaliser un serrage longitudinal, la présence d'autres vérins complémentaires, du côté de l'articulation, n'est pas nécessaire.

En référence aux figures 9 à 11b, la cinématique de fermeture et d'établissement de l'étanchéité de la citerne de stockage 3 est décrite plus précisément ci-après.

Selon la configuration illustrée par la figure 9, le fond ouvrant 31 est basculé en position ouverte par l'intermédiaire du vérin d'actionnement 312 qui exerce une pression sur les platines 313.

Dans les figures 10a et 10b, le vérin d'actionnement s'est partiellement rétracté et le fond ouvrant est arrivé dans une position de fermeture. Dans cette position le fond ouvrant n'est pas plaqué contre le corps principal de la citerne de stockage mais il est placé en vis-à-vis.

Dans cette position et selon la figure 10a, les tubes des deuxièmes éléments 3132, qui sont couplés de manière fixe avec le fond ouvrant par l'intermédiaire des platines, sont en appui sur les butées arrières 392 des tiges filetées des premiers éléments 3131.

Toujours dans cette position de fermeture et selon la figure 10b, les crochets 3140 pivotant sont également placés en vis-à-vis des brides 315.

Ensuite, lors de l'établissement de l'étanchéité, le vérin d'actionnement se rétracte complètement et tire le fond ouvrant contre le corps principal, les tubes arrivant alors en appui sur les butées avants 391 des tiges filetées (figure 11a). De manière complémentaire et selon la figure 11b, les vérins complémentaires 314 poussent les biellettes des genouillères pour que les crochets 3140 pivotent, agrippent les brides 315 et exercent un effort tendant à rapprocher le fond ouvrant 31 du corps principal 30 de la citerne de stockage 3.

## Revendications

1. Véhicule hydrocureur (1) du type comprenant :
- un châssis (2) porteur ;
- une citerne de stockage (3) présentant, selon un axe longitudinal, un corps principal (30) pourvu à l'une de ses extrémités longitudinales d'un fond ouvrant (31), la citerne de stockage étant montée basculante par rapport au châssis ;
- des réservoirs (4) d'eau, disposés latéralement de part et d'autre de la citerne, destinés à alimenter des moyens de curage haute-pression, la citerne de stockage étant montée basculante de façon dissociée des réservoirs ;
- des moyens d'aspiration (5) d'effluents de curage, reliés à la citerne de stockage,
**caractérisé en ce que** les réservoirs comprennent des parois (400) en matière plastique ou composite et s'étendent jusqu'en partie supérieure de la citerne de stockage,
et **en ce qu'**il comprend des moyens de renfort et de soutènement (41) reliant les réservoirs au châssis.

2. Véhicule hydrocureur (1) selon la revendication 1, **caractérisé en ce que** les réservoirs (4) comprennent chacun une pluralité de compartiments (40) indépendants, plaqués les uns contre les autres par les moyens de renfort et de soutènement (41), les compartiments étant reliés à une nourrice (42) commune.

3. Véhicule hydrocureur (1) selon l'une des revendications 1 et 2, **caractérisé en ce que** les réservoirs (4) présentent en regard l'un de l'autre des formes délimitant un berceau (6) apte à accueillir la citerne de stockage (3).

4. Véhicule hydrocureur (1) selon l'une quelconque des revendications 1 à 3, **caractérisé en ce qu'**au moins un des réservoirs (4) présente une cavité inférieure (44) de rangement d'accessoires accessible par une face externe du véhicule.

5. Véhicule hydrocureur (1) selon l'une quelconque des revendications 1 à 4, **caractérisé en ce que** les réservoirs (4) sont portés par un plancher composite (20) porté par le châssis (2).

6. Véhicule hydrocureur (1) selon l'une quelconque des revendications 1 à 5, **caractérisé en ce que** les réservoirs (4) présentent au moins une entretoise interne de rigidification (45).

7. Véhicule hydrocureur (1) selon l'une quelconque des revendications 1 à 6, **caractérisé en ce que** les réservoirs (4) sont réalisés en matière plastique, et préférentiellement en polyéthylène rotomoulé.

8. Véhicule hydrocureur (1) selon l'une quelconque des revendications précédentes, **caractérisé en ce que** les moyens d'aspiration (5) comprennent des moyens de mise en dépression (50) de la citerne de stockage (3),
et **en ce que** le corps principal (30) de la citerne de stockage est réalisé en un matériau composite, le corps principal étant pourvu de renforts périphériques (32) aptes à lutter contre un flambement de la citerne de stockage sous l'effet de la mise en dépression.

9. Véhicule hydrocureur (1) selon la revendication 8, **caractérisé en ce que** les renforts périphériques (32) comprennent une série de cerclages (320) répartis en longueur sur la citerne de stockage.

10. Véhicule hydrocureur (1) selon la revendication 9, **caractérisé en ce que** les cerclages (320) sont métalliques ou réalisés en un matériau composite.

11. Véhicule hydrocureur (1) selon l'une des revendications 9 et 10, **caractérisé en ce qu'**au moins certains des cerclages (320) sont reliés entre eux par une paire de barres longitudinales (321) définissant ensemble un plan au-dessus de la citerne de stockage (3).

12. Véhicule hydrocureur (1) selon l'une quelconque des revendications 8 à 11, **caractérisé en ce que** la citerne de stockage (3) présente au moins un piquage d'aspiration (33) en partie supérieure de la citerne, et **en ce que** la citerne de stockage intègre un bouclier anti-impact (34) interne positionné à l'aplomb du piquage d'aspiration dans une position horizontale de la citerne de stockage.

13. Véhicule hydrocureur (1) selon la revendication 12, **caractérisé en ce que** le bouclier anti-impact (34) consiste en un revêtement amortisseur rapporté dans un évidement interne de la citerne de stockage (3), l'évidement présentant une profondeur et le revêtement présentant une épaisseur égale à la profondeur de l'évidement.

14. Véhicule hydrocureur (1) selon la revendication 13, **caractérisé en ce que** le revêtement amortisseur est réalisé en un élastomère de polyuréthane.

15. Véhicule hydrocureur (1) selon l'une quelconque des revendications précédentes, **caractérisé en ce que** le fond ouvrant (31) est couplé à la citerne de stockage (3) par une articulation (310) autour d'un axe de rotation X, l'articulation étant couplée à un vérin d'actionnement (312) et comprenant au moins une platine (313) solidaire en rotation autour de l'axe de rotation X avec le fond ouvrant, ladite ou lesdites platines présentant un degré de mobilité longitudinal permettant au vérin d'actionnement de serrer longitudinalement, en position de fermeture, le fond ouvrant contre le corps principal (30) de la citerne de stockage.

16. Véhicule hydrocureur (1) selon la revendication 15, **caractérisé en ce que** le fond ouvrant (31) présente au moins une platine (313) présentant un bras (3130) monté rotatif autour de l'axe de rotation X de l'articulation (310), le bras s'étendant selon l'axe longitudinal de la citerne de stockage (3) dans une position de fermeture du fond ouvrant, et présentant un premier élément (3131) et un deuxième élément (3132) montés coulissant l'un par rapport à l'autre, l'un étant fixe en translation selon l'axe longitudinal de la citerne de stockage par rapport à l'axe de rotation X de l'articulation et l'autre, porté par la platine, étant mobile en translation selon l'axe longitudinal de la citerne de stockage par rapport à l'axe de rotation X.

17. Véhicule hydrocureur (1) selon l'une des revendications 15 et 16, **caractérisé en ce que** le fond ouvrant (31) est essentiellement réalisé en un matériau métallique,
et en qu'il comprend des vérins complémentaires (314) destinés à contribuer à serrer le fond ouvrant en position de fermeture contre la citerne de stockage (3), des brides (315) étant portés par la citerne et les vérins complémentaires étant solidarisés sur le matériau métallique du fond ouvrant de telle sorte que les vérins complémentaires coopèrent avec les brides pour assurer l'étanchéité du fond ouvrant en position de fermeture contre la citerne de stockage.

18. Véhicule hydrocureur (1) selon la revendication 17, **caractérisé en ce que** les vérins complémentaires (314) coopèrent avec les brides (315) par l'intermédiaire d'un crochet (3140) pivotant actionné par une genouillère.

## Patentansprüche

1. Saugfahrzeug (1) von dem Typ, der umfasst:
- einen Tragrahmen (2);
- einen Speichertank (3), der entlang einer Längsachse einen Hauptkörper (30) aufweist, welcher an einem seiner Längsenden mit einem öffenbaren Boden (31) versehen ist, wobei der Speichertank in Bezug auf den Rahmen kippbar montiert ist;
- seitlich auf beiden Seiten des Tanks angeordnete Wasserbehälter (4), die dazu bestimmt sind, Hochdruckspülmittel zu speisen, wobei der Speichertank von den Behältern getrennt kippbar montiert ist;
- Mittel zum Aufsaugen (5) von Spülabwässern, die mit dem Speichertank verbunden sind,
**dadurch gekennzeichnet, dass** die Behälter Wände (400) aus Kunst- oder Verbundstoff umfassen und sich bis zum oberen Teil des Speichertanks erstrecken,
und dadurch, dass es Verstärkungs- und Stützmittel (41) umfasst, die die Behälter mit dem Rahmen verbinden.

2. Saugfahrzeug (1) nach Anspruch 1, **dadurch gekennzeichnet, dass** die Behälter (4) jeder eine Vielzahl von unabhängigen Kammern (40) umfassen, die von den Verstärkungs- und Stützmitteln (41) aneinandergedrückt werden, wobei die Kammern mit einer gemeinsamen Zuleitung (42) verbunden sind.

3. Saugfahrzeug (1) nach einem der Ansprüche 1 und 2, **dadurch gekennzeichnet, dass** die Behälter (4) einander zugewandt Formen aufweisen, die eine Wiege (6) begrenzen, welche in der Lage ist, den Speichertank (3) aufzunehmen.

4. Saugfahrzeug (1) nach einem der Ansprüche 1 bis 3, **dadurch gekennzeichnet, dass** mindestens einer der Behälter (4) einen unteren Hohlraum (44) zum Aufbewahren von Zubehör umfasst, der von einer Außenseite des Fahrzeugs her zugänglich ist.

5. Saugfahrzeug (1) nach einem der Ansprüche 1 bis 4, **dadurch gekennzeichnet, dass** die Behälter (4) von einer Verbundbodenplatte (20) getragen werden, die vom Rahmen (2) getragen wird.

6. Saugfahrzeug (1) nach einem der Ansprüche 1 bis 5, **dadurch gekennzeichnet, dass** die Behälter (4) mindestens eine innere Versteifungsstrebe (45) aufweisen.

7. Saugfahrzeug (1) nach einem der Ansprüche 1 bis 6, **dadurch gekennzeichnet, dass** die Behälter (4) aus Kunststoff, und vorzugsweise aus rotationsgeformtem Polyethylen ausgeführt sind.

8. Saugfahrzeug (1) nach einem der vorstehenden Ansprüche, **dadurch gekennzeichnet, dass** die Saugmittel (5) Mittel zum Beaufschlagen (50) des Speichertanks (3) mit einem Vakuum umfassen,
und dadurch, dass der Hauptkörper (30) des Speichertanks aus einem Verbundmaterial ausgeführt ist, wobei der Hauptkörper mit umlaufenden Verstärkungen (32) versehen ist, die dazu in der Lage sind, gegen ein Einknicken des Speichertanks unter der Wirkung der Vakuumbeaufschlagung anzuwirken.

9. Saugfahrzeug (1) nach Anspruch 8, **dadurch gekennzeichnet, dass** die umlaufenden Verstärkungen (32) eine Reihe von Umreifungen (320) umfassen, die am Speichertank in der Länge verteilt sind.

10. Saugfahrzeug (1) nach Anspruch 9, **dadurch gekennzeichnet, dass** die Umreifungen (320) metallisch oder aus einem Verbundmaterial ausgeführt sind.

11. Saugfahrzeug (1) nach einem der Ansprüche 9 und 10, **dadurch gekennzeichnet, dass** mindestens gewisse der Umreifungen (320) über ein Paar Längsstangen (321) miteinander verbunden sind, die zusammen eine Ebene über dem Speichertank (3) definieren.

12. Saugfahrzeug (1) nach einem der Ansprüche 8 bis 11, **dadurch gekennzeichnet, dass** der Speichertank (3) mindestens einen Sauganschluss (33) am oberen Teil des Tanks umfasst, und dadurch, dass der Speichertank ein inneres Schlagschutzschild (34) beinhaltet, das in einer horizontalen Stellung des Speichertanks lotrecht zum Sauganschluss positioniert ist.

13. Saugfahrzeug (1) nach Anspruch 12, **dadurch gekennzeichnet, dass** das Schlagschutzschild (34) aus einer dämpfenden Auskleidung besteht, die in einer inneren Aussparung des Speichertanks (3) angebracht ist, wobei die Aussparung eine Tiefe aufweist, und wobei die Auskleidung eine Dicke aufweist, die gleich der Tiefe der Aussparung ist.

14. Saugfahrzeug (1) nach Anspruch 13, **dadurch gekennzeichnet, dass** die dämpfende Auskleidung aus einem Polyurethanelastomer ausgeführt ist.

15. Saugfahrzeug (1) nach einem der vorstehenden Ansprüche, **dadurch gekennzeichnet, dass** der öffenbare Boden (31) über ein Gelenk (310) um eine Drehachse X herum mit dem Speichertank (3) gekoppelt ist, wobei das Gelenk mit einem Betätigungszylinder (312) gekoppelt ist, und mindestens eine Platte (313) umfasst, die um die Drehachse X herum drehfest mit dem öffenbaren Boden verbunden ist, wobei die Platte(n) einen Längsbeweglichkeitsgrad aufweist/aufweisen, der es dem Betätigungszylinder ermöglicht, in der Verschlussstellung den öffenbaren Boden längs an den Hauptkörper (30) des Speichertanks zu pressen.

16. Saugfahrzeug (1) nach Anspruch 15, **dadurch gekennzeichnet, dass** der öffenbare Boden (31) mindestens eine Platte (313) aufweist, die einen Arm (3130) aufweist, der um die Drehachse X des Gelenks (310) herum drehbar montiert ist, wobei sich der Arm in einer Verschlussstellung des öffenbaren Bodens entlang der Längsachse des Speichertanks (3) erstreckt, und ein erstes Element (3131) und ein zweites Element (3132) aufweist, die in Bezug zueinander gleitend montiert sind, wobei das eine in Bezug auf die Drehachse X des Gelenks entlang der Längsachse des Speichertanks translationsunbeweglich ist, und wobei das andere, das von der Platte getragen wird, in Bezug auf die Drehachse X entlang der Längsachse des Speichertanks translationsbeweglich ist.

17. Saugfahrzeug (1) nach einem der Ansprüche 15 und 16, **dadurch gekennzeichnet, dass** der öffenbare Boden (31) im Wesentlichen aus einem metallischen Material ausgeführt ist,
und dadurch, dass es komplementäre Zylinder (314) umfasst, die dazu bestimmt sind, dazu beizutragen, den öffenbaren Boden in Verschlussstellung an den Speichertank (3) zu pressen, wobei der Tank Flansche (315) trägt und wobei die komplementären Zylinder fest am metallischen Material des öffenbaren Bodens verbunden sind, derart, dass die komplementären Zylinder mit den Flanschen zusammenwirken, um in Verschlussstellung die Dichtigkeit des öffenbaren Bodens am Speichertank sicherzustellen.

18. Saugfahrzeug (1) nach Anspruch 17, **dadurch gekennzeichnet, dass** die komplementären Zylinder (314) mittels eines schwenkbaren Hakens (3140), der von einem Kniehebel betätigt wird, mit den Flanschen (315) zusammenwirken.

## Claims

1. Jetting truck (1) of the type comprising:
- a load-bearing chassis (2);
- a storage tank (3) having a main body (30) along a longitudinal axis and provided, at one of the longitudinal ends thereof, with a base (31) that can open, the storage tank being mounted so as to tilt relative to the chassis;
- water reservoirs (4) which are arranged laterally on either side of the tank and are designed to supply high-pressure jetting means, the storage tank being mounted so as to tilt independently of the reservoirs;
- suction means (5) for effluents resulting from jetting, connected to the storage tank,
**characterised in that** reservoirs comprise plastic or composite walls (400) and extend to the upper portion of the storage tank,
and **in that** it comprises reinforcement and support means (41) connecting the reservoirs to the chassis.

2. Jetting truck (1) according to claim 1, **characterised in that** each of the reservoirs (4) comprises a plurality of independent compartments (40), pressed against one another by the reinforcement and support means (41), the compartments being connected to a shared manifold (42).

3. Jetting truck (1) according to either claim 1 or claim 2, **characterised in that** the reservoirs (4) have shapes facing one another, said shapes delimiting a cradle (6) capable of receiving the storage tank (3).

4. Jetting truck (1) according to any of claims 1 to 3, **characterised in that** at least one of the reservoirs (4) has a lower cavity (44) for stowing accessories, that can be accessed from an external face of the truck.

5. Jetting truck (1) according to any of claims 1 to 4, **characterised in that** the reservoirs (4) are supported by a composite floor (20) supported by the chassis (2).

6. Jetting truck (1) according to any of claims 1 to 5, **characterised in that** the reservoirs (4) have at least one inner rigidifying crossbar (45).

7. Jetting truck (1) according to any of claims 1 to 6, **characterised in that** the reservoirs (4) are made of a plastic material, and preferably of rotomoulded polyethylene.

8. Jetting truck (1) according to any of the previous claims, **characterised in that** the suction means (5) comprise means (50) for placing the storage tank (3) under a negative pressure,
and **in that** the main body (30) of the storage tank is made of a composite material, the main body being provided with peripheral reinforcements (32) capable of preventing the buckling of the storage tank under the effect of the negative pressure.

9. Jetting truck (1) according to claim 8, **characterised in that** the peripheral reinforcements (32) comprise a series of encircling bands (320) distributed over the length of the storage tank.

10. Jetting truck (1) according to claim 9, **characterised in that** the encircling bands (320) are made of metal or are made of a composite material.

11. Jetting truck (1) according to either claim 8 or claim 11, **characterised in that** at least some of the encircling bands (320) are connected to one another by a pair of longitudinal bars (321) jointly defining a plane above the storage tank (3).

12. Jetting truck (1) according to any of claims 8 to 11, **characterised in that** the storage tank (3) has at least one suction tapping (33) in the upper portion of the tank, and **in that** the storage tank integrates an inner shock-absorbing shield (34) positioned vertically to the suction tapping in a horizontal position of the storage tank.

13. Jetting truck (1) according to claim 12, **characterised in that** the shock-absorbing shield (34) consists of a damper coating fixed in an inner recess of the storage tank (3), the recess having a depth and the coating having a thickness that is equal to the depth of the recess.

14. Jetting truck (1) according to claim 13, **characterised in that** the damper coating is made of a polyurethane elastomer.

15. Jetting truck (1) according to any of the previous claims, **characterised in that** the opening base (31) is coupled to the storage tank (3) by a hinge (310) rotating about a rotational axis X, the hinge being coupled to an actuator (312) and comprising at least one plate (313) that is fixed to the opening base for rotation therewith about the rotational axis X, said one or more plates having a degree of longitudinal mobility that allows the actuator to longitudinally clamp, in the closed position, the opening base against the main body (30) of the storage tank.

16. Jetting truck (1) according to claim 15, **characterised in that** the opening base (31) has at least one plate (313) having an arm (3130) that is mounted such that it rotates about the rotational axis X of the hinge (310), the arm extending along the longitudinal axis of the storage tank (3) in a closed position of the opening base, and having a first element (3131) and a second element (3132) mounted such that they slide relative to one another, one being fixed in translation along the longitudinal axis of the storage tank relative to the rotational axis X of the hinge and the other, supported by the plate, being capable of moving in translation along the longitudinal axis of the storage tank relative to the rotational axis X.

17. Jetting truck (1) according to either claim 15 or claim 16, **characterised in that** the opening base (31) is substantially made of a metal material, and **in that** it comprises complementary actuators (314) intended to contribute to the clamping of the opening base in the closed position against the storage tank (3), whereby clamps (315) are supported by the tank and the complementary actuators are secured to the metal material of the opening base such that the complementary actuators engage with the clamps to ensure the leakproof sealing of the opening base in the closed position against the storage tank.

18. Jetting truck (1) according to claim 17, **characterised in that** the complementary actuators (314) engage with the clamps (315) by means of a pivoting hook (3140) driven by a toggle joint.
